(19)

Europäisches Patentamt
European Patent Office
Office européen des brevets

(11) **EP 1 772 188 A2**

(12) **EUROPEAN PATENT APPLICATION**

(43) Date of publication:
**11.04.2007 Bulletin 2007/15**

(51) Int Cl.:
**B01J 20/04** *(2006.01)* **B01J 20/30** *(2006.01)*
**B01J 20/282** *(2006.01)*

(21) Application number: **06121726.1**

(22) Date of filing: **04.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **03.10.2005 JP 2005290563**

(71) Applicant: **Pentax Corporation**
**Tokyo 174-8639 (JP)**

(72) Inventors:
- **Kobayashi Shintaro**
 **c/oPentax Corporation**
 **Tokyo 174-8639 (JP)**
- **Yubuta, Kazuhiro**
 **c/o Nisshin Engineering Ince**
 **Tokyo 103-8544 (JP)**

(74) Representative: **Schaumburg, Thoenes, Thurn, Landskron**
**Patentanwälte**
**Postfach 86 07 48**
**81634 München (DE)**

(54) **Method for producing particles, particles, and adsorption apparatus**

(57) Disclosed herein are a method for producing particles whereby dense particles (especially, spherical particles) composed of a calcium phosphate-based compound can be efficiently produced at low cost, particles which are produced by the method, and an adsorption apparatus which is produced by using the particles as an adsorbent. The method for producing particles comprises preparing a liquid containing primary particles composed of a calcium phosphate-based compound and a dispersion medium; feeding the liquid into a heated atmosphere in the form of droplets to obtain aggregates of the primary particles by removing the dispersion medium from each of the droplets and then bring the aggregates into a molten state so that each of the aggregates is formed into a spherical shape; and solidifying the aggregates in the molten state to obtain dense secondary particles. The heated atmosphere preferably contains plasma produced by ionization of an ambient gas. Further, the plasma forms a plasma flame in the heated atmosphere; and the droplets are preferably fed into the circumferential portion of the plasma flame

EP 1 772 188 A2

Description

## BACKGROUND OF THE INVENTION

### Field of the Invention

The present invention relates to a method for producing particles, particles, and an adsorption apparatus, and more specifically relate to a method for producing particles, particles produced by the method, and an adsorption apparatus produced by using the particles as an adsorbent.

### Description of the Prior Art

Calcium phosphate-based compounds are a kind of ceramic material, and are widely used as, for example, biomaterials and stationary phase materials for chromatography.

In a case where biomaterials of a calcium phosphate-based compound are produced, particles are prepared from a slurry (liquid) of the calcium phosphate-based compound, the particles are molded into various desired shapes to obtain molded bodies, and then the molded bodies are baked (sintered) to obtain sintered bodies. Then, the thus obtained sintered bodies are clinically used as artificial bones and artificial dental roots, and the like.

In a case where a calcium phosphate-based compound is used as an adsorbent for chromatography, particles of the calcium phosphate-based compound are prepared in the same manner as in the case of the production of the biomaterials described above, and then the particles are baked (sintered) to obtain sintered fine particles. The thus obtained sintered fine particles are used by being packed into a filling space of a column.

As a method for producing such particles, there is known a method for producing secondary particles composed of hydroxyapatite in which at least a part of hydroxyl groups is substituted by a halogen group (see, for example, JP-A No. 2004-330113). This method comprises the steps of preparing a slurry containing primary particles composed of the hydroxyapatite, and granulating the secondary particles from the primary particles by using a spray dry method.

The spray dry method is a method for bringing droplets containing primary particles and a liquid phase component into contact with heated air to volatilize the liquid phase component from each of the droplets instantaneously to thereby obtain spherical secondary particles.

However, since secondary particles obtained by the method described above are aggregates in which a plurality of primary particles are simply aggregated, the secondary particles have high porosity and low mechanical strength. Therefore, in a case where an adsorption apparatus for liquid chromatography is produced by filling such particles as an adsorbent in a filling space of a column, the particles are collapsed by high pressure in the column, which may result in clogging of a filter.

Further, when the particles have high porosity, separation components diffuse in the pores of the particles, which may lead to a problem that separation characteristics of the adsorption apparatus are lowered.

In addition, according to the spray dry method, relatively small particles having a particle diameter of a few $\mu$m degree can not be obtained in high yield. Therefore, it takes a long time to obtain a lot of such small particles, thus resulting in increased production cost.

The above problems can be resolved by using dense particles, but a method for efficiently producing such dense particles has not yet been established until now.

## SUMMARY OF THE INVENTION

It is therefore an object of the present invention to provide a method for producing particles by which dense particles (especially, spherical particles) composed of a calcium phosphate-based compound can be efficiently produced at low cost. It is also an object of the present invention to provide particles which are produced by the method for producing particles, and an adsorption apparatus which is produced by using the particles as an adsorbent.

In order to achieve the above object, a first aspect of the present invention is directed to a method for producing particles. The method comprises preparing a liquid containing primary particles composed of a calcium phosphate-based compound and a dispersion medium; feeding the liquid into a heated atmosphere in the form of droplets to obtain aggregates of the primary particles by removing the dispersion medium from each of the droplets and then bring the aggregates into a molten state so that the respective aggregates is formed into a spherical shape; and solidifying the aggregates in the molten state to obtain dense secondary particles.

According to the first aspect of the present invention, it is possible to efficiently produce the dense particles (especially, spherical particles) composed of the calcium phosphate-based compound at low cost.

In the method of the present invention, it is preferred that the heated atmosphere contains plasma produced by ionization of an ambient gas.

As a result, it is possible to easily bring the aggregates of the primary particles into the molten state to obtain the secondary particles.

Further, in the method of the present invention, it is also preferred that the plasma forms a plasma flame in the heated atmosphere, and the droplets are fed into the circumferential portion of the plasma flame.

By doing so, it is possible to prevent the decomposition of the calcium phosphate-based compound which constitutes the primary particles. As a result, the dense secondary particles can be obtained more reliably.

In this case, it is preferred that the temperature at the circumferential portion of the plasma flame is in the range of 1,000 to 3,000°C.

By setting the temperature at the circumferential portion of the plasma flame to a value within the above range, it is possible to more reliably prevent the decomposition of the calcium phosphate-based compound which constitutes the primary particles and to reliably melt the aggregates.

Further, in the method of the present invention, it is also preferred that the aggregates in the molten state each having the spherical shape are solidified by forcibly cooling them.

By forcibly cooling the aggregates in the molten state each having the spherical shape, it is possible to improve a yield of the secondary particles per unit time. As a result, the producing cost of the secondary particles can be reduced.

Moreover, in the method of the present invention, it is also preferred that each of the obtained secondary particles has a surface with irregularities, and the surface of each secondary particle is subjected to a smoothing process to decrease or remove the irregularities.

By doing so, the surface of each secondary particle is smoothly formed, thereby enabling the flowability of the secondary particles to be improved.

In this case, it is preferred that the smoothing process includes a thermal treatment.

Since the thermal treatment is a dry process, it is possible to decrease or remove the irregularities of the surface of the particle easily as compared to a wet process such as the chemical process. Therefore, the thermal treatment can be carried out without strict control of the conditions thereof .

Further, in the method of the present invention, it is also preferred that the temperature of the thermal treatment is in the range of 400 to 900°C.

By setting the temperature of the thermal treatment to a value within the above range, a reaction of a non-reaction product (a calcium source and a phosphate source) is surely completed in the plasma process described above, so that it is possible to obtain a desired calcium phosphate-based compound. Further, by this thermal treatment, undesired minuscule fragments are removed by being smoothed down into the surface of each secondary particle. This makes it possible to prevent the fragments from separating from the secondary particles to clog a filter of a column, when an adsorption apparatus is produced by using the obtained secondary particles.

In the method of the present invention, it is preferred that the porosity of the obtained secondary particles is 5% or less.

This allows the secondary particles to have excellent mechanical strength.

Further, in the method of the present invention, it is also preferred that an average particle diameter of the obtained secondary particles is in the range of 0.5 to 20 $\mu$m.

According to the method mentioned above the secondary particles having such a particle diameter can be obtained in a relatively short period of time and at low cost.

In the method of the present invention, it is preferred that an average roundness coefficient C of the obtained secondary particles represented by the following formula (I) is in the range of 0.8 to 0.99:

$$C = 4\pi S / L^2 \quad \cdot \cdot \cdot (I)$$

Wherein S ($\mu$m$^2$) represents an area of a projection image of a particle as a measuring object, and L ($\mu$m) represents a circumferential length of the projection image of the particle.

This improves the flowability of the secondary particles.

Moreover, in the method of the present invention, it is also preferred that the calcium phosphate-based compound includes hydroxyapatite or tricalcium phosphate.

From the viewpoint of a stoichiometric ratio, these calcium phosphate-based compounds are a material from which stable crystalline particles can be easily formed.

A second aspect of the present invention is directed to particles produced by the particle production method according to the first aspect of the present invention.

According to the second aspect of the present invention, it is possible to obtain the dense particles (especially, spherical particles) composed of the calcium phosphate-based compound.

A third aspect of the present invention is directed to an adsorption apparatus which includes a column having a filling space, and an adsorbent filled in the filling space, wherein the adsorbent including the particles according to the first aspect of the present invention.

According to the third aspect of the present invention, it is possible to obtain the adsorption apparatus having excellent separation characteristics.

These and other objects, structures and results of the present invention will be apparent more clearly when the following detailed description of the preferred embodiments is considered taken in conjunction with the appended drawings.

## BRIEF DESCRIPTION OF THE DRAWINGS

Fig. 1 is a schematic view of a thermal plasma equipment;

Fig. 2 is a cross-sectional view of an embodiment of an adsorption apparatus according to the present invention;

Fig. 3 is a scanning electron microscope image of particles obtained in Example 2;

Fig. 4 is a scanning electron microscope image of particles obtained in Example 4;

Fig. 5 is a scanning electron microscope image of particles obtained in Comparative Example; and

Fig. 6 is a graph which shows an absorbance distribution related to the evaluation result of the separation characteristics of constituents performed on the adsorption apparatuses produced in each of Examples 1 to 3 and Comparative Example.

## DETAILED DESCRIPTION OF THE INVENTION

Hereinbelow, a method for producing particles, particles, and an adsorption apparatus according to the present invention will be described in detail with reference to preferred embodiments shown in the accompanying drawings.

The particle production method of the present invention comprises a step (slurry preparing step) of preparing a slurry (liquid) including primary particles composed of a calcium phosphate-based compound and a dispersion medium; and a step (granulating step) of feeding the liquid into a heated atmosphere in the form of droplets thereby obtaining dense secondary particles (particles of the present invention). Each of the steps will be described below.

(Slurry preparing step)

First, a slurry is prepared by adding primary particles composed of a calcium phosphate-based compound into a dispersion medium, and mixing the primary particles and the dispersion medium.

Examples of a calcium phosphate-based compound include apatites such as hydroxyapatite, fluorapatite, and carbonate apatite, dicalcium phosphate, tricalcium phosphate, tetracalcium phosphate, and octacalcium phosphate.

In this regard, it is preferred that these calcium phosphate-based compounds have a Ca/P ratio of about 1.0 to 2.0, and more preferably a Ca/P ratio of about 1.3 to 1.7. The calcium phosphate-based compounds having the Ca/P ratio of the above range are suitably used for a biomedical material because they have excellent safety for a living body and biocompatibility.

In particular, hydroxyapatite having Ca/P ratio: 1.67 and tricalcium phosphate having Ca/P ratio: 1. 5 are preferably used, since these calcium phosphate-based compounds are a material from which stable crystalline particles can be easily formed due to their stoichiometric ratio.

In addition, hydroxyapatite and tricalcium phosphate have composition and structure which are similar to those of an inorganic component of human bone, and therefore have high biocompatibility. For this reason, particles composed of hydroxyapatite or tricalcium phosphate have high biocompatibility with components derived from a living body, and therefore can be suitably used as biomaterials such as artificial bones and bone filling materials and as stationary phase materials for chromatography.

It is to be noted that these calcium phosphate-based compounds can be synthesized by using a conventional wet synthesis method, a conventional dry synthesis method, or a conventional hydrothermal synthesis method.

Further, the shape of each primary particle is not particularly limited, and it may be spherical shape, needle shape, lamellar shape, amorphous shape, or the like.

Examples of the dispersion medium include water, and alcohol such as methanol, ethanol, n-propanol, and isopropanol. These dispersion mediums can be used singly or in combination of two or more of them.

Further, the concentration of the primary particles in the slurry is preferably 8 wt% or more, and more preferably in the range of about 10 to 35 wt%. This allows a viscosity of the slurry to be optimized. As a result, fine droplets having uniform size can be obtained in a step described below.

It is to be noted that a component other than the above materials may be contained in the slurry.

Further, the slurry may be subjected to a deairing process which removes bubbles from the slurry, if necessary. Examples of a method that can be used for the deairing process include a method which applies ultrasound vibration to the slurry (ultrasound vibration method), a method which places the slurry in a reduced-pressure atmosphere (decompression method), and the like.

(Granulating step)

Next, the prepared slurry is fed into a heated atmosphere in the form of droplets. By doing so, the slurry is brought into contact with the heated atmosphere, so that the dispersion medium can be volatilized and removed from each of the droplets.

Examples of a method for forming droplets of the slurry include a centrifugal spray method which forms droplets of the slurry by bringing the slurry into contact with a high-speed rotating disk, a pressure spray method which forms droplets of the slurry by jetting the slurry from a pressure nozzle.

It is to be noted that each of the droplets includes a plurality of primary particles and the dispersion medium.

Each of the droplets fed into the heated atmosphere is heated when they contact the heated atmosphere, so that the dispersion medium is volatilized instantaneously to be removed from each of the droplets. As a result, aggregates of the primary particles are formed.

These aggregates are melted by being heated further, so that each of the aggregates in a molten state is formed into a spherical shape due to its surface tension. And then, by solidifying the aggregates in the molten state, secondary particles each having a spherical shape can be obtained.

The droplets are changed to the secondary particles in the heated atmosphere with almost no elapsed time.

It is to be noted that the heated atmosphere is not particularly limited, but preferably contains plasma produced by ionization of an ambient gas. The plasma can apply very high energy to each of the droplets uniformly, so that the droplets are heated efficiently and uniformly.

As a result, it is possible to efficiently vaporize and remove the dispersion medium from each of the droplets, to easily bring the aggregates of the primary particles into the molten state, thereby enabling the secondary particles to be obtained.

Based on this standpoint, plasma produced by a thermal plasma method is particularly preferably used as the plasma. By using the thermal plasma method, radicals (chemical active species) can be easily produced from gas molecules in an atmosphere. Namely, the thermal plasma method makes it relatively easy to obtain plasma (thermal plasma). According to the thermal plasma method, the aggregates are efficiently subjected to the thermal energy.

Examples of a method (thermal method) for turning a gas into plasma include, but are not limited thereto, various methods such as a method using electric discharge (e.g., high-frequency induction thermal plasma, arc discharge, glow discharge), a method using light irradiation (e.g., laser light irradiation, lamp light irradiation), and a method using application of heat (e.g., application of chemical reaction heat).

Among the above methods, the high-frequency induction thermal plasma method is a method for producing plasma by ionizing an ambient gas by raising the temperature of the ambient gas through electromagnetic induction using a coil through which a high frequency current flows.

On the other hand, the arc discharge or the glow discharge is a method for producing plasma by using heat generated by direct-current discharge in a reduced-pressure atmosphere. The pressure of the reduced-pressure atmosphere is preferably in the range of about 1 to 1,500 Pa, and more preferably in the range of about 1.3 to 1,300 Pa.

Examples of the laser light to be used for the laser light irradiation include: gas lasers such as helium-neon laser, argon ion laser, carbon dioxide gas laser, excimer laser, and nitrogen laser; solid lasers such as ruby laser, YAG (Yttrium Aluminum Garnet) laser, glass laser, and neodymium laser; metal lasers such as helium-cadmium laser, copper vapor laser, and gold vapor laser; and semiconductor lasers.

Examples of the lamp to be used for the lamp light irradiation include; discharge lamps such as flash lamps, xenon lamps, and metal halide lamps; and heating lamps such as halogen lamps and tungsten lamps.

An example of the heat generated by the chemical reaction includes heat generated by combustion or explosion of explosive.

Among these various methods (thermal plasma method) for producing plasma, the electric discharge methods are preferably used. Particularly, the high-frequency induction thermal plasma method is preferably used. By using the electric discharge method (especially, the high-frequency induction thermal plasma method), it is possible to more efficiently turn an ambient gas into plasma and to easily set the temperature of an atmosphere to a high value, thereby enabling the secondary particles to be easily and reliably produced at low cost.

In addition, the high-frequency induction thermal plasma method can produce plasma with less uneven distribution in a relatively large space, which is advantageous in that the secondary particles with small variations in shape and particle diameter can be produced.

The plasma produced by the various methods generally forms a plasma flame having a plasma temperature distribution in which a plasma temperature becomes higher toward a central portion thereof and becomes lower toward a circumferential portion thereof.

For example, according to the high-frequency induction thermal plasma method, the electromagnetic induction becomes stronger toward a central axis of the coil described above. Therefore, in the vicinity of the central axis of the coil, electrons accelerated by the electromagnetic induction collide against gas molecules in the heated atmosphere more strongly. As a result, the plasma flame having the higher plasma temperature at the central portion thereof is formed.

The temperature at the central portion of the plasma flame is preferably in the range of about 2,000 to 15,000°C, more preferably in the range of about 7,000 to 15,000°C, and even more preferably in the range of about 10,000 to 15,000°C.

It is to be noted that the droplets are preferably fed into the circumferential portion of the plasma flame. By doing so, it is possible to melt the aggregates while preventing decomposition of the calcium phosphate-based compound which constitutes the primary particles more reliably, because the temperature at the circumferential portion of the plasma flame is lower than that at the central portion of the plasma flame. As a result, the dense secondary particles can be obtained more reliably.

Based on this standpoint, the temperature at the circumferential portion of the plasma flame is preferably in the range of about 1,000 to 3,000°C, and more preferably in the range of about 1,500 to 2,500°C. By setting the temperature at the circumferential portion of the plasma flame to a value within the above range, it is possible to melt the aggregates reliably while preventing decomposition of the calcium phosphate-based compound which constitutes the primary particles more reliably.

It is to be noted that the phrase "temperature of plasma" does not refer to an actual temperature of an atmosphere but refers to a theoretical temperature determined by converting the kinetic energy of plasma into a temperature value.

In this granulating step, the aggregates in the molten state each having the spherical shape may be solidified by distancing them from the plasma flame, but preferably the aggregates are solidified by forcibly cooling them. By forcibly cooling the aggregates in the molten state each having the spherical shape, it is possible to carry out cooling of them effectively in a short period of time, thereby enabling a yield of the secondary particles per unit time to be improved. As a result, the production cost of the secondary particles can be reduced.

Further, by forcibly cooling the aggregates in the molten state, the produced secondary particles can be adequately cooled. Therefore, when such secondary particles are deposited, the deformation of the secondary particles due to the temperature of themselves can be prevented.

Next, when each of the obtained secondary particles has a surface with irregularities, the surface may be subjected to a smoothing process to decrease or remove the irregularities, if necessary. By doing so, the surface of each secondary particle is smoothed, thereby enabling the flowability of the secondary particles to be improved.

Examples of the smoothing process include a thermal treatment or a chemical treatment, but the thermal treatment is preferably employed. According to the thermal treatment, the primary particles or the fragment thereof which adhere to or protrude from the surface of each secondary particle are smoothed down into the surface. As a result, the surface of each secondary particle can be formed into a smooth surface.

Further, since the thermal treatment is a dry process, it is possible to decrease or remove the irregularities of the surface easily as compared to a wet process such as the chemical process. Therefore, the thermal treatment can be carried out without strict control of the conditions thereof.

From this viewpoint, the temperature of this thermal treatment should lie in a temperature range at which a part of the primary particles can be smoothed down into the surface of each secondary particle. Specifically, the temperature of this thermal treatment is preferably in the range of about 400 to 900°C, and more preferably in the range of about 600 to 750°C, though this range slightly varies depending on the composition of the calcium phosphate-based compound to be used. By setting the temperature of the thermal treatment to a value within the above range, a reaction of a non-reaction product (a calcium source and a phosphate source) is surely completed in the plasma process described above, so that it is possible to obtain a desired calcium phosphate-based compound. Further, by this thermal treatment, undesired minuscule fragments are removed by being smoothed down into the surface of each secondary particle. This makes it possible to prevent the fragments from separating from the secondary particles to clog a filter of a column, when an adsorption apparatus is produced by using the obtained secondary particles.

The time of the thermal treatment is not particularly limited, but preferably in the range of about 10 minutes to 3 hours, and more preferably in the range of about 30 minutes to 2 hours.

Examples of the thermal treatment atmosphere include oxidizing atmospheres such as air and oxygen, inert atmospheres such as nitrogen and argon, reducing atmospheres such as hydrogen and carbon monoxide, and reduced-pressure atmospheres.

An average particle diameter of the thus obtained secondary particles is preferably in the range of about 0.5 to 20 $\mu$m, and more preferably in the range of about 1 to 10 $\mu$m. According to the present invention, the secondary particles having such a particle diameter can be obtained in a relatively short period of time and at low cost.

The secondary particles having such a particle diameter can be suitably used as, for example, an adsorbent of an adsorption apparatus and carriers capable of adsorbing (capturing) objects to be captured, such as proteins, nucleic acids, or cells.

The secondary particles are dense particles, in which the porosity of the dense secondary particles is preferably 5% or less, and more preferably 3% or less. This makes it possible the secondary particles to have excellent mechanical strength. Therefore, if a bone filling material formed from a sintered body produced by using such secondary particles, it has sufficient hardness so that crack is difficult to occur. The particle production method of the present invention can be suitably used for producing such dense particles.

Further, when the secondary particles are used as an adsorbent of an adsorption apparatus for liquid chromatography, even if the secondary particles are subjected to high pressure, deformation of them can be prevented, and they can maintain the function as the adsorbent for a long period of time.

As described above, each of the secondary particles has a spherical shape. An average roundness coefficient C of the secondary particles represented by the following formula (I) is preferably in the range of about 0.8 to 0.99, and more preferably in the range of about 0.85 to 0.99:

$$C = 4\pi S/L^2 \quad \cdots \quad (I)$$

wherein S ($\mu m^2$) represents an area of a projection image of a particle as a measuring object, and L ($\mu m$) represents a circumferential length of the projection image of the particle.

It is to be noted that when a projection image of a particle as a measuring object is a perfect circle, the roundness coefficient C of the particle is the maximum, 1. That is, a roundness coefficient C closer to the maximum, 1 means that a particle is closer to a perfect sphere.

The secondary particles having the average roundness coefficient C within the above range have a spherical shape close to a perfect sphere, and therefore they can exhibit excellent dispersibility in a dispersion medium. For this reason, if the secondary particles are used as carriers which adsorb or capture objects to be captured described above, such particles can be uniformly dispersed in a liquid sample containing the objects to be captured so that the particles are capable of adsorbing or capturing such objects efficiently. Therefore, the secondary particles of the present invention can be preferably used as such carriers.

Since the secondary particles having the average roundness coefficient C within the above range have a spherical shape close to a perfect sphere, the flowability of the secondary particles is also improved, thereby improving the filling properties of the secondary particles during molding and the density of a molded body of the secondary particles. Such secondary particles can be used as a raw material for preparing a dense molded body having high strength. Further, by sintering the molded body, it is possible to obtain a sintered body having excellent dimensional accuracy and high strength.

Further, for example, when cosmetics such as foundation are produced by using the secondary particles, the cosmetics can be well slipped on skin, and be well fitted to skin.

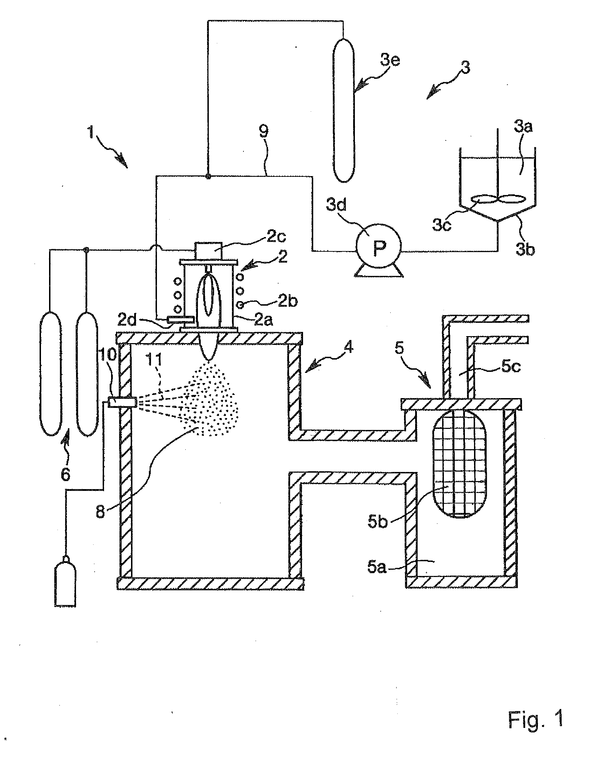

The particle production method of the present invention described above is preferably carried out using, for example, equipment shown in Fig. 1.

Fig. 1 is a schematic view of thermal plasma equipment which can produce spherical particles of a calcium phosphate-based compound by the use of plasma produced by a high-frequency induction thermal plasma method. It is to be noted that in the following description, the upper side and the lower side in Fig. 1 will be referred to as "upper side" and "lower side", respectively. Further, in Fig. 1, some components are omitted to simplify the illustration.

The equipment for producing particles of a calcium phosphate-based compound (thermal plasma equipment) 1 includes a plasma torch 2 for producing thermal plasma, a raw material feeding device 3 for feeding a raw material into the plasma torch 2, a chamber 4 for producing particles of a calcium phosphate-based compound (secondary particles) 8, and a collection section 5 for collecting the particles of a calcium phosphate-based compound 8 produced in the chamber 4.

The plasma torch 2 includes a quartz tube 2a and a coil for high-frequency oscillation 2b surrounding the outside of the quartz tube 2a. At the side of the plasma torch 2, there is provided an introduction tube 2d for introducing a raw material and an atomizing gas (carrier gas) into the plasma torch 2. Further, on the top of plasma torch 2, there is provided a plasma gas inlet 2c. A plasma gas (ambient gas) is fed through the plasma gas inlet 2c into the plasma torch 2 in the vertical direction along an inner tube of the quartz tube 2a.

The plasma gas is fed from a plasma gas supply source 6 into the plasma gas inlet 2c. Examples of the plasma gas include argon, nitrogen, hydrogen, oxygen, and mixtures thereof. In the plasma gas supply source 6, two different plasma gases are prepared. As described above, the plasma gas is fed through the plasma gas inlet 2c into the plasma torch 2 in the vertical direction along the inner tube of the quartz tube 2a. Then, a high-frequency electric current is applied to the coil for high-frequency oscillation 2b, so that plasma flame 7 is produced.

As described above, this plasma flame 7 has a plasma temperature distribution in which a plasma temperature becomes higher toward a central portion thereof and becomes lower toward a circumferential portion thereof.

It is to be noted that the outside of the quartz tube 2a is covered with a tube (not shown in the drawing) provided concentrically with the quartz tube 2a. In the space created between this tube and the quartz tube 2a, cooling water (not shown in the drawing) is circulated to water-cool the quartz tube 2a to prevent the quartz tube 2a from reaching a too high temperature due to the plasma flame 7 produced in the plasma torch 2.

The raw material feeding device 3 feeds a raw material, that is, a slurry 3a containing primary particles into the plasma torch 2. The raw material feeding device 3 is connected through a tube 9 to the introduction tube 2d provided at the side of the plasma torch 2. The word "slurry" means a liquid-solid mixture in which fine solid particles are blended in a liquid.

The raw material feeding device 3 includes a container 3b for holding the slurry 3a, a stirrer 3c for stirring the slurry 3a in the container 3b, a pump 3d for applying pressure to the slurry 3a to feed the slurry 3a through the introduction tube 2d into the plasma torch 2, and an atomizing gas supply source 3e. An atomizing gas is supplied by the atomizing gas supply source 3e, and is fed together with the slurry 3a through the introduction tube 2d into the plasma torch 2. In this way, the slurry 3a is atomized in the plasma torch 2. That is, the slurry 3a is divided into droplets. Examples of the atomizing gas include argon, nitrogen, hydrogen, oxygen, and air.

In this embodiment, at the side of the plasma torch 2, there is provided the introduction tube 2d. As a result, the slurry 3a can be fed into the circumferential portion of the plasma flame 7 excluding the central portion thereof.

On the other hand, in the chamber 4 provided adjacent to the lower end of the plasma torch 2, particles of a calcium phosphate-based compound (secondary particles) 8 are produced. More specifically, the slurry 3a fed from the raw material feeding device 3 and atomized (divided into droplets) in the plasma torch 2 changes to the aggregates of the primary particles by vaporizing and removing of the dispersion medium contained in the slurry 3a in the plasma flame 7. Further, the aggregates are transformed into a molten state, and each of the aggregates in the molten state is formed into a spherical shape due to its surface tension. Then, each of the aggregates in the molten state is solidified by distancing from the plasma flame 7, so that secondary particles of a calcium phosphate-based compound 8 are produced in the chamber 4.

In the upper part of the chamber 4, there is provided a cooling means 10.

As shown in Fig. 1, the cooling means 10 cools the aggregates in the molten state by blowing a cooling gas 11 to the aggregates in the molten state. However, the present invention is not limited to such a method. For example, the cooling of the aggregates in the molten state may be achieved by cooling down the temperature of the gas contained in the chamber.

Examples of the cooling gas 11 used by the cooling means 10 include: oxidizing gases such as air and oxygen; inert gases such as nitrogen, helium, neon, and argon; and reducing gases such as hydrogen and carbon monoxide. Among these gases, an inert gas is preferably used. By using such an inert gas as a cooling gas 11, it is possible to prevent the calcium phosphate-based compound from being degenerated due to oxidation or reduction.

As described above, a gas contained in the chamber 4 is cooled, the chamber 4 may be with a refrigerant or the like. In this case, a gas contained in the chamber 4 is cooled by heat transfer.

It is to be noted that the cooling means 10 is optional and may be omitted.

The collection section 5 for collecting the produced particles of the calcium phosphate-based compound 8 is provided on the side of the lower part of the chamber 4. The collection section 5 includes a collection chamber 5a, a filter 5b provided in the collection chamber 5a, and a vacuum pump (not shown in the drawing) connected with the collection chamber 5a through a tube 5c extending from the top of the collection chamber 5a. The produced particles are drawn into the collection chamber 5a by the vacuum pump (not shown in the drawing), and are then retained and collected on the surface of the filter 5b.

The secondary particles (particles of the present invention) produced by the particle production method of the present invention can be used for biomaterials such as artificial bones and bone filling materials, stationary phase materials for chromatography, carriers for immobilizing cells, adsorbents for healthcare products such as virus adsorption masks, air fresheners and antibacterial soaps, and cosmetics such as powder and foundation.

A sintered body to be used as a biomaterial can be produced by the following method.

First, secondary particles of a calcium phosphate-based compound are prepared in such a manner as described above. Then, these secondary particles of the calcium phosphate-based compound are molded into a desired shape to obtain a molded body.

Such a molded body can be produced by any one of the following various methods I to V: I) filling a slurry containing secondary particles of a calcium phosphate-based compound into a desired mold; II) unevenly distributing the solid matter of the slurry by precipitating or centrifuging the slurry; III) filling the slurry into a desired mold and dehydrating the slurry to leave the solid matter in the mold; IV) compression molding; and V) mixing secondary particles of a calcium phosphate-based compound and watery glue, filling the mixture into a mold, and drying the mixture.

The thus obtained molded body is naturally or artificially dried. In the case of artificial drying, the molded body is dried by hot-air drying, freeze drying, or vacuum drying.

Further, the molded body may be subjected to machining such as cutting, grinding, and polishing.

Next, the dried molded body is sintered in a furnace to obtain a sintered body.

The temperature for sintering is not particularly limited as long as a calcium phosphate-based compound can be sintered, but is preferably in the range of about 700 to 1,300°C, and more preferably in the range of about 900 to 1,250°C.

The time for sintering slightly varies depending on the sintering temperature etc., but is not particularly limited. However, the sintering time is preferably in the range of about 0.1 to 10 hours, and more preferably in the range of about 1 to 5 hours.

Examples of a sintering atmosphere include, but are not limited to, oxidizing atmospheres such as air and oxygen, inert atmospheres such as nitrogen, helium, neon, and argon, reducing atmospheres such as hydrogen and carbon monoxide, and reduced-pressure atmospheres.

It is to be noted that sintering may be repeated more than once, if necessary.

In this way, a sintered body is obtained.

Next, an adsorption apparatus of the present invention using the particles according to the present invention will be described.

Here, by way of example, a case where the particles of the present invention are used for an adsorbent for use in an adsorption apparatus for liquid chromatography will be described.

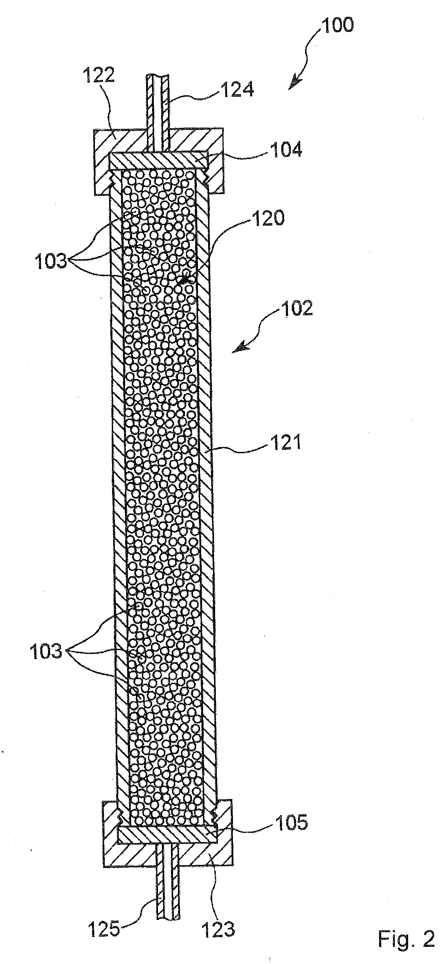

Fig. 2 is a cross-sectional view of an embodiment of the adsorption apparatus according to the present invention. It is to be noted that in the following description, the upper side and the lower side in Fig. 2 will be referred to as "inflow side" and "outflow side", respectively.

Here, the "inflow side" means the side from which a liquid such as a sample or an eluant is fed into the adsorption apparatus according to the present invention for separating and purifying an object compound. On the other hand, the "outflow side" means the side opposite to the "inflow side", that is, the side from which the liquid flows out of the adsorption apparatus according to the present invention.

The adsorption apparatus 100 shown in Fig. 2 includes a column 102, a particulate adsorbent 103, and two filter members 104 and 105.

The column 102 includes a column body 121 and caps 122 and 123 attached to the inflow side end and the outflow side end of the column body 121, respectively.

The column body 121 is formed from a hollow cylindrical member.

The column body 121 has an opening on each of the both ends thereof, and the opening on the inflow side and the opening on the outflow side are covered with the filter members 104 and 105, respectively. In such a state, the caps 122 and 123 are threadably attached to the inflow side end and the outflow side end of the column body 121, respectively.

The column 102 having such a structure described above has an adsorbent filling space 120 defined by the column body 121 and the filter members 104 and 105. At least a part of this adsorbent filling space 120 (in this embodiment, substantially whole adsorbent filling space 120) is filled with the adsorbent (particles of the present invention) 103.

The liquid-tightness of the column body 121 is ensured by attaching the caps 122 and 123 to the column body 121.

An inlet pipe 124 and an outlet pipe 125 are liquid-tightly fixed into substantially middle portions of the caps 122 and 123, respectively. Through the inlet pipe 124 and the filter member 104, a liquid such as a sample or an eluant is fed to the adsorbent 103. The liquid fed to the adsorbent 103 passes through pore spaces (gaps) between particles of the adsorbent 103, and then the liquid passes through the filter member 105 and the outlet pipe 125, and then flows out of the column 102. As a result, components (compounds) contained in the sample are separated from each other based on the difference in degree of adsorption to the adsorbent 103.

Each of the filter members 104 and 105 has the function of preventing the discharge of the adsorbent 103 from the adsorbent filling space 120.

When a liquid passes through the adsorbent filling space 120, the liquid is subjected to high pressure by using a pump or the like. The adsorbent 103 composed of the dense particles of the present invention has a high mechanical strength, and therefore can be prevented from being deformed by the pressure. This makes it possible to prevent fragments of the deformed adsorbent 103 from accumulating on the filter member 105 and clogging it. As a result, the adsorption apparatus 100 can be used for a long period of time.

Further, since the adsorbent 103 is composed of the dense particles, the liquid does not enter into each of the dense particles, and therefore the adsorbent 103 can prevent or suppress separation components from diffusing therein. This makes it possible to prevent separation characteristics of the adsorption apparatus 100 from being lowered.

The method for producing particles, the particles, and the adsorption apparatus of the present invention have been described with reference to the embodiments shown in the drawing, but the present invention is not limited thereto.

For example, the particle production method of the present invention may further comprise an additional step for any purpose, if necessary.

**Examples**

Actual examples of the present invention will be described below.

1. Production of Particles and Adsorption apparatus (Example 1)

<1> First, in accordance with a conventional wet synthesis method, hydroxyapatite particles (primary particles) having an average particle diameter of 150 nm were prepared.
Next, the hydroxyapatite particles were added to a 50 vol% aqueous ethanol solution (dispersion medium), so that the concentration thereof was 30 wt%, and then they were mixed to obtain a slurry.
Next, bubbles were removed from the slurry by using a deairing process which applies ultrasound vibration to the slurry.
<2> Next, the slurry obtained in <1> was atomized into a circumferential portion of the plasma flame 7 produced in the thermal plasma equipment 1 shown in Fig. 1 to obtain spherical particles (secondary particles). It is to be noted that a cooling gas was air.
The operating conditions of the thermal plasma equipment 1 are shown below.

| | |
|---|---|
| Frequency of high-frequency electric current: | 4 MHz |
| Output of high-frequency electric current: | 70 kW |
| Plasma temperature at central portion of plasma flame: | 10,000°C |
| Plasma temperature at circumferential portion of plasma flame: | 2,000°C |
| Type of gas for producing plasma: | argon + oxygen |

It is to be noted that the particles obtained had an average particle diameter of 3 μm.
<3> Next, the particles obtained in <2> were subjected to a thermal treatment.
The conditions of the thermal treatment are shown below.

| | |
|---|---|
| Temperature: | 900°C |
| Time: | 1 hour |
| Atmosphere: | air |

<4> Next, the particles subjected to the thermal treatment in <3> were filled into an inner space of a column body shown in Fig. 2 to obtain an adsorption apparatus for liquid chromatography.
It is to be noted that an internal diameter and the length of the column body were 4.6 mm and 35 mm, respectively.

(Example 2)

Particles and an adsorption apparatus were produced in the same manner as in the Example 1 except that the temperature of the thermal process in <3> was changed to 700°C.

(Example 3)

Particles and an adsorption apparatus were produced in the same manner as in the Example 1 except that the temperature of the thermal process in <3> was changed to 400°C.

(Example 4)

Particles and an adsorption apparatus were produced in the same manner as in the Example 1 except that the thermal treatment in <3> was omitted.

(Example 5)

Particles and an adsorption apparatus were produced in the same manner as in the Example 1 except that the slurry was atomized into an atmosphere heated by an electric heater instated of the plasma flame.
It is to be noted that the heating temperature of the slurry (droplets) atomized in <2> was 1,800°C.

(Comparative Example)

Particles and an adsorption apparatus were produced in the same manner as in the Example 1 except that the conditions in <2> and <3> were changed as follows.

<2> The slurry obtained in <1> was granulated by using a spray dry method to obtain spherical particles.

It is to be noted that the particles obtained had an average particle diameter of 5 $\mu$m.

<3> The particles obtained in <2> were subjected to a thermal treatment.

The conditions of the thermal treatment are shown below.

Temperature: 950°C
Time: 1 hour
Atmosphere: air

2. Evaluations

2.1 Evaluation of Particle Structure, Shape and Particle Diameter

Evaluation of the particle structure and the average particle diameter was made on the particles produced in each of the Examples and the Comparative Example.

The particle structure was evaluated by observation of the particles using a scanning electron microscope (SEM).

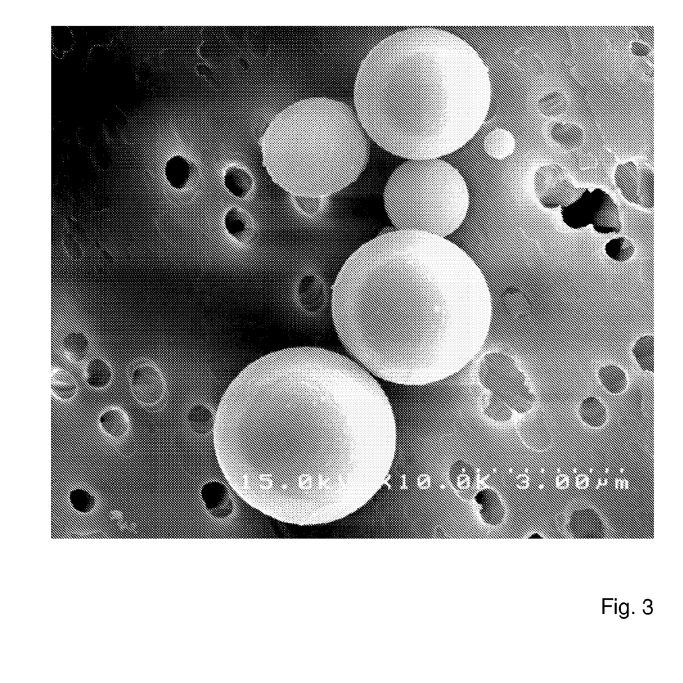

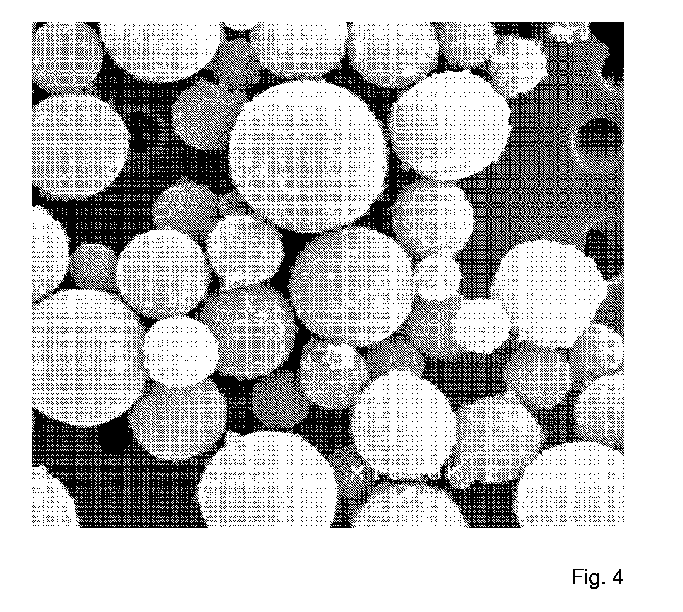

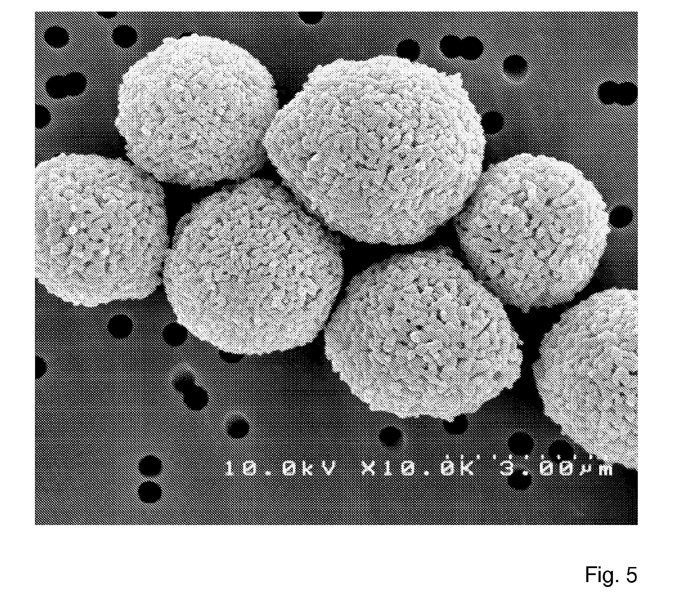

The SEM image of the particles produced in the Example 2, the SEM image of the particles produced in the Example 4, and the SEM image of the particles produced in the Comparative Example are shown in Fig. 3, Fig. 4 and Fig. 5, respectively, as representative examples.

As a result of observation with a microscope, it has been confirmed that the particles produced in each of the Examples and the Comparative Example were substantially spherical in shape.

Among them, the surface of the particles produced in each of the Examples was smooth. Especially, the surface of the particles produced in the Example 2 had more smooth surface.

On the other hand, it has been confirmed that the particle produced in the Comparative Example was composed of an aggregate which was constituted from a plurality of primary particles. Further, it has been confirmed that the particle had a plurality of pores formed between the primary particles.

First, for each of the Examples and Comparative Example, the SEM image obtained in the above was analyzed using an image analysis software ("Particle Analysis Ver. 2.0" developed by Sumitomo Metal Technology Inc.) to determine the roundness coefficients C of the particles represented by the following formula (I). Then, an average roundness coefficient C was calculated as the average of roundness coefficients C of 10 particles.

$$C = 4\pi S/L^2 \quad \cdots \quad (I)$$

wherein S ($\mu$m$^2$) represents an area of a projection image of a particle as a measuring object, and L ($\mu$m) represents a circumferential length of the projection image of the particle.

Further, an average particle diameter was calculated as the average of particle diameters of 10 particles determined from the SEM image of the particles.

The evaluation results of the average of roundness coefficients C and the average particle diameter are shown in Table 1.

Table 1

| | Granulating Method | Evaluation Results | |
| --- | --- | --- | --- |
| | | Average Roundness Particle Coefficient C | Average Diameter ($\mu$m) |
| Example 1 | melting by plasma | 0.91 | 3 |
| Example 2 | melting by plasma | 0.93 | 2 |
| Example 3 | melting by plasma | 0.88 | 2 |
| Example 4 | melting by plasma | 0.89 | 3 |
| Example 5 | melting by electric heater | 0.85 | 5 |

(continued)

| | Granulating Method | Evaluation Results | |
|---|---|---|---|
| | | Average Roundness Particle Coefficient C | Average Diameter ($\mu$m) |
| Comp.Ex. | spray dry method | 0.79 | 5 |

As can be seen from Table 1, the average roundness coefficient C of the particles produced in each of the Examples was 0.85 or more. From the result, it has been conf irmed that the particles produced in each of the Examples were very close to a perfect sphere in shape.

On the other hand, the average roundness coefficient C of the particles produced in the Comparative Example was less than 0.8, that is, low.

Further, the particles produced in each of the Example 5 and the Comparative Example had the average particle diameter of approximately 5 $\mu$m.

Furthermore, it has been confirmed that the particles produced in each of the Examples 1 to 4 were especially fine particles having the average particle diameter of 2 or 3 $\mu$m.

2.2 Evaluation of Porosity

Evaluation of the porosity was made on the particles produced in each of the Examples.

The porosity was evaluated by measurement of pore size distribution using a mercury porosimetry.

As a result, the particles produced in each of the Examples were particles having the porosity of less than 1%.

2.3 Characteristic Evaluation of Adsorption Apparatus

Evaluation of the separation characteristics of constituents was made on the adsorption apparatuses produced in each of the Examples and the Comparative Example.

First, 1 mM sodium phosphate buffer solution (pH 6.8) was injected into the adsorption apparatus, and then the solution filled in the adsorption apparatus was replaced with the sodium phosphate buffer solution. Namely, equilibration of the adsorption apparatus was performed by the sodium phosphate buffer solution.

Next, 30 $\mu$L of sample containing ovalbumin, myoglobin, chymotrypsinogen and cytochrome C as constituents to be separated was injected into the adsorption apparatus.

And by using a linear gradient method in which the concentration of the sodium phosphate buffer solution (pH 6.8) to be passed through the adsorption apparatus was gradually changed from 1 mM to 1 M for 12 minutes, the constituents were separated.

The absorbance at wavelength 280 nm of eluant was measured using an UV detector.

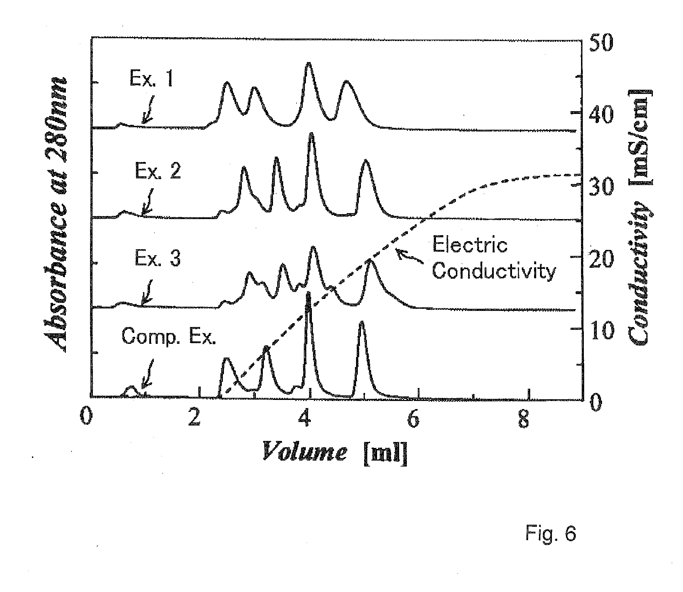

The measurement result is shown in Fig. 6. The absorbance distribution of the adsorption apparatus produced in each of the Examples 1 to 3 and the Comparative Example is shown in Fig. 6, as representative examples. And the electric conductivity transition of the eluant is also shown in Fig. 6. It is to be noted that the value of the left vertical axis in Fig. 6, the value of the right vertical axis in Fig. 6, and the value of the horizontal axis in Fig. 6 show the value of the absorbance, the value of the electric conductivity, and the value of the eluant volume, respectively.

It has been confirmed that the absorbance curves in Fig. 6 have four peaks derived from the four constituents contained in the sample, respectively.

All the adsorption apparatuses could separate the constituents reliably so that four peaks appear. Therefore, this result indicates that the adsorption apparatuses have substantially the same separation characteristics.

Further, the particles produced in the Comparative Example had appropriate separation characteristics. However, since the particles produced in the Comparative Example were porous, the mechanical strength of the particles produced in the Comparative Example was lower than that of the particles produced in each of the Examples. Therefore, the adsorption apparatuses produced in the Comparative Example is unlikely to withstand when it is used repeatedly.

Furthermore, it has been confirmed that the adsorption apparatus produced in the Example 2 had slightly excellent separation characteristics among the adsorption apparatuses produced in the Examples 1 to 3. These adsorption apparatuses differ only in the temperature of the thermal treatment. This result shows that the most preferable temperature of the thermal treatment is about 700°C, and this makes it possible to obtain an adsorption apparatus having excellent separation characteristics.

**Effect of the Invention**

According to the present invention, it is possible to efficiently produce dense particles (especially, spherical particles) composed of a calcium phosphate-based compound at low cost.

Further, by feeding a slurry containing primary particles into a heated atmosphere including plasma in the form of droplets, each of the droplets is efficiently and uniformly heated, and therefore aggregates of the primary particles are obtained. Further, the aggregates are easily transformed into a molten state, and therefore second particles can be easily obtained.

Further, by feeding the droplets into a circumferential portion of a plasma flame, it is possible to prevent the calcium phosphate-based compound which constitutes the primary particles from being decomposed, and to melt the aggregates. As a result, the dense secondary particles can be obtained more reliably.

Furthermore, by forcibly cooling the aggregates in the molten state, they are efficiently cooled, and therefore the secondary particles can be efficiently produced in a short period of time. This makes it possible to improve a yield of the secondary particles per unit time, and to reduce the producing cost of the secondary particles.

Finally, it is also to be understood that the present disclosure relates to subject matter contained in Japanese Patent Application No. 2005-290563 (filed on October 3, 2005) which is expressly incorporated herein by reference in its entirety.

**Claims**

1.  A method for producing particles, comprising:

    preparing a liquid containing primary particles composed of a calcium phosphate-based compound and a dispersion medium;
    feeding the liquid into a heated atmosphere in the form of droplets to obtain aggregates of the primary particles by removing the dispersion medium from each of the droplets and then bring the aggregates into a molten state so that the respective aggregates are formed into a spherical shape; and
    solidifying the aggregates in the molten state to obtain dense secondary particles.

2.  The method for producing particles as claimed in claim 1, wherein the heated atmosphere contains plasma produced by ionization of an ambient gas.

3.  The method for producing particles as claimed in claim 2, wherein the plasma forms a plasma flame in the heated atmosphere; and
    wherein the droplets are fed into the circumferential portion of the plasma flame.

4.  The method for producing particles as claimed in claim 3, wherein the temperature at the circumferential portion of the plasma flame is in the range of 1,000 to 3,000°C.

5.  The method for producing particles as claimed in claim 1, wherein the aggregates in the molten state each having the spherical shape are solidified by forcibly cooling them.

6.  The method for producing particles as claimed in claim 1, wherein each of the obtained secondary particles has a surface with irregularities, and the surface of each secondary particle is subjected to a smoothing process to decrease or remove the irregularities.

7.  The method for producing particles as claimed in claim 6, wherein the smoothing process includes a thermal treatment.

8.  The method for producing particles as claimed in claim 7, wherein the temperature of the thermal treatment is in the range of 400 to 900°C.

9.  The method for producing particles as claimed in claim 1, wherein the porosity of the obtained secondary particles is 5% or less.

10. The method for producing particles as claimed in claim 1, wherein an average particle diameter of the obtained secondary particles is in the range of 0.5 to 20 $\mu$m.

11. The method for producing particles as claimed in claim 1 wherein an average roundness coefficient C of the obtained secondary particles represented by the following formula (I) is in the range of 0.8 to 0.99:

$$C= 4\pi S/L^2 \quad \cdots \quad (I)$$

wherein S ($\mu$m$^2$) represents an area of a projection image of a particle as a measuring object, and L ($\mu$m) represents a circumferential length of the projection image of the particle.

12. The method for producing particles as claimed in claim 1, wherein the calcium phosphate-based compound includes hydroxyapatite or tricalcium phosphate.

13. Particles produced by the method for producing particles defined by claim 1

14. An adsorption apparatus, comprising:

    a column having a filling space, and
    an adsorbent filled in the filling space, the adsorbent including the particles defined by claim 13.

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004330113 A
- JP 2005290563 A